## Europäisches Patentamt
## European Patent Office
## Office européen des brevets

(19)

(11) Veröffentlichungsnummer: **0 019 798**
**B1**

(12)

# EUROPÄISCHE PATENTSCHRIFT

(45) Veröffentlichungstag der Patentschrift:
**08.08.84**

(21) Anmeldenummer: **80102663.4**

(22) Anmeldetag: **13.05.80**

(51) Int. Cl.³: **H 02 M 1/08**

(54) Schaltungsanordnung zur Verbesserung der Zündwinkelsymmetrie der Zündimpulse eines Steuersatzes für einen mehrpulsigen Stromrichter.

(30) Priorität: **31.05.79 DE 2922249**

(43) Veröffentlichungstag der Anmeldung:
**10.12.80 Patentblatt 80/25**

(45) Bekanntmachung des Hinweises auf die Patenterteilung:
**08.08.84 Patentblatt 84/32**

(84) Benannte Vertragsstaaten:
**AT BE DE FR GB SE**

(56) Entgegenhaltungen:
**US - A - 3 922 594**

**IEEE TRANSACTIONS ON INDUSTRIAL ELECTRONICS AND CONTROL INSTRUMENTATION, Band 1ECI-22, Nr. 3, August 1978, NEW YORK (US), R. SIMARD et al.: "Economical Equidistant pulse fixing scheme for thyristorized DC drives", Seiten 425-429**

(73) Patentinhaber: **SIEMENS AKTIENGESELLSCHAFT, Berlin und München Wittelsbacherplatz 2, D-8000 München 2 (DE)**

(72) Erfinder: **Weibelzahl, Manfred, Dipl.-Ing., Eichenweg 10, D-8521 Weiher (DE)**
Erfinder: **Schaumann, Kurt, Schwedlerstrasse 41, D-8520 Erlangen (DE)**
Erfinder: **Meusel, Wolfgang, Aufseszstrasse 18, D-8520 Erlangen (DE)**

**Beschreibung**

Bei bekannten Steuersätzen für Stromrichter wird zur Erzeugung der Zündsteuersignale eine periodische Vergleichsspannung eines von einer taktgebenden Wechselspannung gesteuerten Oszillators, beispielsweise eine Dreiecksspannung, mit einer Steuergleichspannung verglichen (DIN 41 750 vom Februar 1972, Blatt 7, Seite 4, Bild 2). Die Schnittpunkte der periodischen Vergleichsspannung mit der Steuergleichspannung legen den Beginn der Zündsteuerimpulse und damit auch der Zündimpulse fest. Die Frequenz des Oszillators wird üblicherweise so gewählt, daß in einer Periode zwei um 180° el gegeneinander versetzte Zündimpulse gebildet werden, die den Steuerstrecken der entsprechenden gesteuerten Hauptventilen des Stromrichters zugeführt werden. Für einen zweipulsigen Stromrichter ist somit ein Oszillator erforderlich. Bei Steuersätzen für höherpulsige Stromrichter werden entsprechend viele Vergleiche zwischen phasenverschobenen periodischen Vergleichsspannungen mehrerer Oszillatoren mit der Steuergleichspannung durchgeführt; beispielsweise können bei einem Steuersatz für einen sechspulsigen Stromrichter drei derartige Oszillatoren vorgesehen sein, die um 60° phasenverschobene Vergleichsspannungen erzeugen. Die Oszillatoren können so »weich« eingestellt sein, daß sie auch dynamischen Regelvorgängen gut folgen können, die Phasensprünge in der taktgebenden Wechselspannung verursachen.

Es besteht die Forderung, daß zur Vermeidung von Unsymmetrien in der Ausgangsspannung des Stromrichters die zeitlichen Abstände des Impulsbeginns der Zündimpulse für die gesteuerten Hauptventile des Stromrichters möglichst genau äquidistant sind. Dies bedeutet, daß bei hohen Genauigkeitsanforderungen die Oszillatoren und Vergleicher sehr genau aufeinander abgeglichen werden müssen und nur geringe Veränderungen durch unterschiedlichen Temperaturgang oder Alterung aufweisen dürfen.

Es ist auch möglich, bei einem Steuersatz für einen höherpulsigen Stromrichter nur einen einzigen Oszillator vorzusehen, der eine periodische Vergleichsspannung mit entsprechend höherer Frequenz erzeugt, die mit der Steuergleichspannung verglichen wird. Die hieraus abgeleiteten Zündimpulse werden zyklisch auf die gesteuerten Hauptventile des Stromrichters durchgeschaltet. Hiermit läßt sich im stationären Betrieb eine gute Zündwinkelsymmetrie erreichen, wenn der Oszillator hinreichend stabil schwingt. Ein derartig »hart« eingestellter Oszillator ist dann jedoch nicht in der Lage, dynamischen Regelvorgängen zu folgen, die mit Phasensprüngen in der taktgebenden Wechselspannung verbunden sind.

Die Erfindung geht aus von der nach der DE-OS 2 525 666 bekannten Schaltungsanordnung zur Verbesserung der Symmetrie der von einem Steuersatz für einen mehrpulsigen Stromrichter ausgegebenen Zündimpulse, die durch Verstärkung von Zündsteuersignalen gebildet werden, deren Beginn jeweils durch Vergleich einer periodischen Vergleichsspannung eines von einer taktgebenden Wechselspannung gesteuerten Oszillators mit einer Steuergleichspannung bestimmt wird, wobei ein ODER-Gatter zur Bildung einer zusammengefaßten Steuersignalfolge aus den Zündsteuersignalen sowie ein Phasenregelkreis und eine erste Zeitverzögerungsstufe zur Bildung einer äquidistanten Triggerimpulsfolge vorgesehen sind, welche gegenüber der Steuersignalfolge um eine erste vorgegebene Zeitdauer, die etwa der größtmöglichen Unsymmetrie der Zündsteuersignale entspricht, verzögert ist und die Zündimpulse durch konjunktive Verknüpfung der einzelnen Zündsteuersignale mit der Triggerimpulsfolge oder von einer zweiten Verzögerungsschaltung bewirkt werden, welche jeweils um eine zweite Zeitdauer verzögert gegenüber den Zündsteuersignalen Impulse ausgibt, wobei die zweite Zeitdauer größer ist als die erste Zeitdauer.

Bei dieser bekannten Schaltungsanordnung besteht die zweite Verzögerungsschaltung aus den einzelnen zu zündenden Ventilen des Stromrichters zugeordneten Sägezahngeneratoren, welchen jeweils ein mit einer Auswerteschaltung versehener Grenzwertmelder nachgeordnet ist, der dann einen Ausgangsimpuls erzeugt, wenn die Sägezahnspannung des Sägezahngenerators einen vorbestimmten Wert erreicht oder wenn der Schaltimpuls in den Sägezahn hineintaktet. Einen besonderen Sägezahngenerator für jedes zu zündende Ventil bereitzustellen, bedeutet aber insbesondere bei höherpulsigen Schaltungen einen recht erheblichen Aufwand, zum anderen wird trotz sorgfältigster Justage der zeitbestimmenden Elemente aufgrund der Bauteiltoleranzen bzw. ihrer unterschiedlichen Reaktionen auf Umwelteinflüsse es nicht zu vermeiden sein, daß sich die Verzögerungszeiten in den einzelnen Zündkreisen unterscheiden, so daß dann, wenn der Zündimpuls nicht von der Ausgangsimpulsfolge des Phasenregelkreises sondern von der zweiten Verzögerungsschaltung geliefert wird, die Äquidistanz dieser Impulse sogar noch schlechter wird als die der vom Steuersatz ausgegebenen Zündsteuersignale.

Die Aufgabe der vorliegenden Erfindung ist es, bei einer Schaltung der vorgenannten Art mit einem einfachen Schaltungsaufbau den Aufwand für die zweite Verzögerungsschaltung zu reduzieren und eine Verschlechterung der Zündwinkelsymmetrie bei dem zuvor beschriebenen Betriebsfall zu verhindern.

Gelöst wird diese Aufgabe erfindungsgemäß dadurch, daß die zweite Verzögerungsschaltung in einer für alle Stromrichterventile gemeinsamen zweiten Zeitverzögerungsstufe mit Ansprechverzögerung besteht, deren Eingang mit dem Ausgang der ersten Zeitverzögerungsstufe oder mit dem Ausgang des ODER-Gatters verbunden ist, wobei eine Anzahl von ersten Sperrgattern und zweiten Sperrgattern vorgesehen sind, deren erster Eingang jeweils mit einem Zündsteuersignal für ein Stromrichterventil belegt ist, während der zweite Eingang der ersten Sperrgatter jeweils mit dem Ausgang der zweiten Zeitverzögerungsstufe und der zweite Eingang der zweiten Sperrgatter jeweils mit dem Ausgang des Phasenregelkreises belegt ist, wobei die Ausgänge der beiden mit demselben Zündsteuersignal beaufschlagten Sperrgatter jeweils mit den Eingängen eines ODER-Gatters verbunden sind.

Ein Ausführungsbeispiel der Erfindung ist in den Zeichnungen dargestellt und wird im folgenden näher beschrieben. Es zeigt

Fig. 1 eine schematsiche Darstellung eines von einem Steuersatz gesteuerten sechspulsigen Stromrichters,

Fig. 2 ein Blockschaltbild eines Steuersatzes mit einer erfindungsgemäßen Schaltungsanordnung,

Fig. 3 Impulsdiagramme zur Erläuterung der Fig. 2.

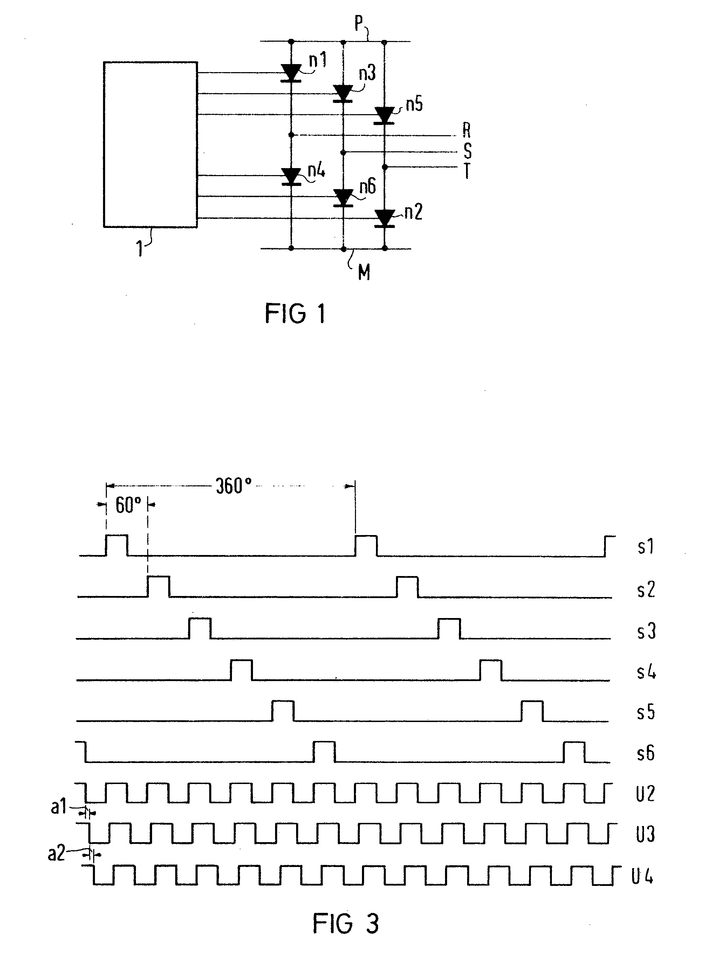

Die Fig. 1 zeigt schematisch einen sechspulsigen Stromrichter mit den gesteuerten Hauptventilen n1 bis n6 in einer Brückenschaltung, der eine Dreiphasenspannung RST in eine Gleichspannung zwischen der Phase P und Masse M umformt. Die Steuerelektroden der als Thyristoren ausgebildeten gesteuerten Hauptventile werden von einem Steuersatz 1 mit Zündimpulsen angesteuert.

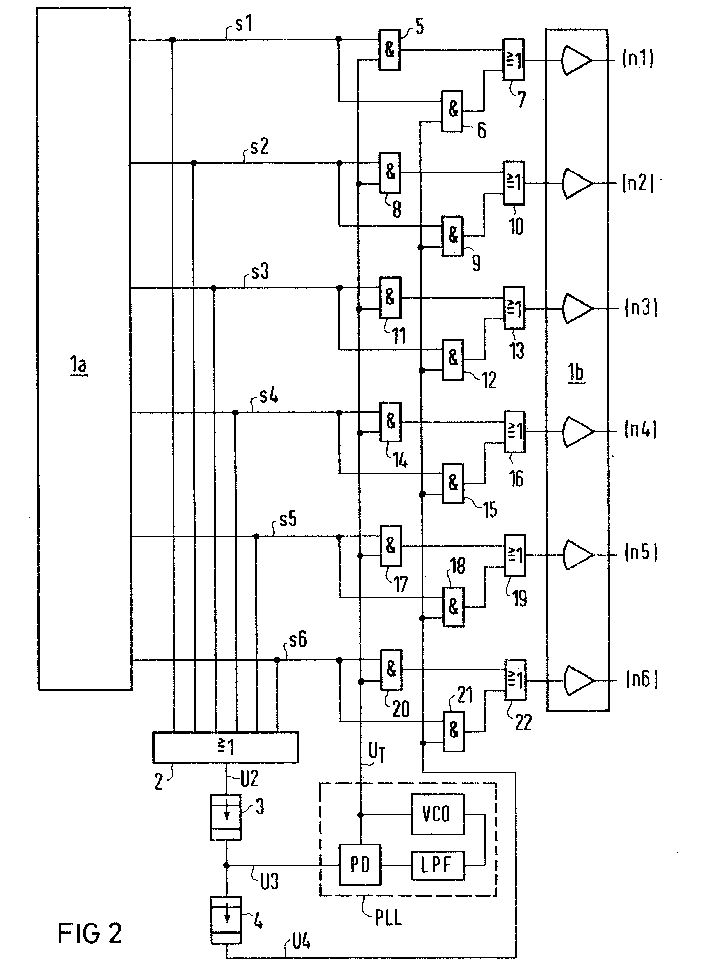

Fig. 2 zeigt den Steuersatz 1 aufgeteilt in einen signalverarbeitenden Teil 1a, der die Synchronisiereinheit, drei Oszillatoren zur Erzeugung von periodischen Vergleichsspannungen, Vergleicher und Impulsformer enthält, und in einen Verstärkerteil 1b, der die Endverstärker und gegebenenfalls die Impulsübertrager enthält. Es kann sich hierbei um einen handelsüblichen Steuersatz handeln. Bei der vorliegenden Anmeldung werden die sich nicht überlappenden Ausgangssignale s1 bis s6 des signalverarbeitenden Teils 1a als »Zündsteuersignale« bezeichnet, da sie auf dem Niveau der Signalverarbeitung liegen. Die Zündsteuersignale s1 bis s6 (siehe Fig. 3) werden im Verstärkerteil 1b zu den eigentlichen Zündimpulsen für die gesteuerten Hauptventile des Stromrichters verstärkt. Die Anstiegsflanken der Zündimpulse sollen möglichst genau äquidistant sein. Bei einem sechspulsigen Stromrichter beispielsweise sollen diese Abstände möglichst exakt 60°el betragen. Bei bekannten Steuersätzen können die Abstände der Anstiegsflanken jedoch gewisse zeitliche Toleranzen aufweisen, die durch einen ungenauen Abgleich der Oszillatoren und Vergleicher, durch unterschiedliche Temperaturen der einzelnen Oszillatoren und Vergleicher, sowie unterschiedlichen Temperaturgang und Alterung der Bauelemente verursacht werden können. Die Erfindung ermöglicht es, aus den hinsichtlich der Zündwinkelsymmetrie ungenauen Zündsteuersignalen hochgenau Zündimpulse abzuleiten.

Zwischen dem signalverarbeitenden Teil 1a und dem Verstärkerteil 1b des Steuersatzes ist die erfindungsgemäße Schaltungsanordnung zur Verbesserung der Zündwinkelsymmetrie angeordnet. Sie enthält ein ODER-Gatter 2 zur diskuntiven Verknüpfung sämtlicher Zündsteuersignale s1 bis s6 für die gesteuerten Hauptventile n1 bis n6. Am Ausgang des ODER-Gatters 2 erscheint eine Steuersignalfolge U2 (siehe Fig. 3). Unter der Annahme, daß die Abstände der ansteigenden Flanken der Zündsteuersignale nicht exakt äquidistant sind, sind auch die Impulse der zusammengefaßten Steuersignalfolge U2 nicht exakt äquidistant. Die Steuersignalfolge U2 wird einer Zeitverzögerungsstufe 3 zugeführt, deren Ansprechverzögerung a1 dem größtmöglichen Fehler in der Äquidistanz der Zündsteuersignale des signalverarbeitenden Teils 1a des Steuersatzes entspricht. Am Ausgang der Zeitverzögerungsstufe 3 erscheint eine verzögerte Steuersignalfolge U3, die gegenüber der Steuersignalfolge U2 des ODER-Gatters 2 um einen zeitlichen Betrag a1 verschoben ist. Die verzögerte Steuersignalfolge U3 der Zeitverzögerungsstufe 3 wird einem Phasenregelkreis PLL zugeführt. Geeignete Phasenregelkreise sind beispielsweise unter der Bezeichnung Phase locked loop (PLL) bekannt und im Handel erhältlich. In der Literatur sind derartige Phasenregelkreise beispielsweise beschrieben im Aufsatz von J. A. Mattis »The Phase Locked Loop — A communication system building block« (Broadcasting Engineering, Feb. 1972) oder im Aufsatz von Dr. Joachim Ziemann »Wirkungsweise und Anwendung von integrierten Phase-locked-loop-Schaltungen« (Der Elektroniker, Nr. 1/1973, EL 14—19). Aufbau und Anwendungsbeispiele sind aus der Firmendruckschrift von SIGNETICS »Lineare Integrierte Schaltungen«, S. 195—304 bekannt.

Der Phasenregelkreis PLL enthält einen Phasendetektor PD, dem ein Tiefpaßfilter LPF nachgeschaltet ist. Der Ausgang des Tiefpaßfilters LPF ist — gegebenenfalls über einen Verstärker — auf den Steuerspannungseingang eines spannungsgesteuerten Oszillators VCO geschaltet, der eine Rechteckschwingung als Triggerimpulsfolge $U_T$ erzeugt. Den Diskriminatoreingängen des Phasendetektors PD wird die Signalfolge U3 der Zeitverzögerungsstufe 3 und die Triggerimpulsfolge $U_I$ des spannungsgesteuerten Oszillators VCO zugeführt. Wenn die beiden dem Phasendetektor PD zugeführten Impulsfolgen voneinander abweichen, so erzeugt der Phasendetektor ein Differenzsignal, das nach einer durch das Tiefpaßfilter LPF bedingten Verzögerung die Steuerspannung für den spannungsgesteuerten Oszillator VCO verändert in dem Sinne, daß die Triggerimpulsfolge des spannungsgesteuerten Oszillators VCO der verzögerten Steuersignalfolge U3 nachgeführt wird. Da sich die Abweichungen der zeitlichen Abstände der Anstiegsflanken der Impulse der Steuersignalfolge U2 bzw. U3 im Mittel aufheben, läßt sich durch eine geeignete Einstellung der Kenngrößen des Tiefpaßfilters LPF erreichen, daß der spannungsgesteuerte Oszillator VCO eine Triggerimpulsfolge mit einer hochgenauen Äquidistanz der Anstiegsflanken erzeugt, die nicht von den Abweichungen einzelner Impulse der Steuersignalfolge beeinflußt wird. Der spannungsgesteuerte Oszillator VCO des Phasenregelkreises PLL erzeugt somit eine hochgenaue Rechteckimpulsfolge als Triggerimpulsfolge, die im Mittel um den zeitlichen Betrag a1 gegenüber der Steuersignalfolge U2 des ODER-Gatters 2 verschoben ist.

Zur Bildung der Zündimpulse werden die Zündsteuersignale s1 bis s6 in Sperrgattern 5, 8, 11, 14, 17, 20 konjunktiv mit der Triggerimpulsfolge $U_T$ des spannungsgesteuerten Oszillators VCO verknüpft. Die Ausgänge der Sperrgatter 5, 8, 11, 14, 17, 20 sind über ODER-Gatter 7, 10, 13, 16, 19, 22 mit den Endverstärkern im Verstärkerteil 1b des Steuersatzes verbunden. Die Anstiegsflanken der Zündimpulse werden auf diese Weise bestimmt durch die hochgenau äquidistanten Anstiegsflanken der Triggerimpulse des spannungsgesteuerten Oszillators VCO im Phasenregelkreis PLL.

Im dargestellten Beispiel erfolgt die Ansteuerung der Stromrichterventile des sechspulsigen Stromrichters mit Zündimpulsen von ca. 30° el, wobei für jede Stromführungszeit nur ein Zündimpuls vorgesehen ist. Bei derartigen Steuersätzen sind keine weiteren Maßnahmen erforderlich, sofern die Dauer der Zündsteuersignale 60° el nicht übersteigt. Auch bei Steuersätzen, die die Stromrichterventile in jeder Stromführungszeit mit einem Doppelimpuls ansteuern, der aus den Zündimpulsen für aufeinanderfolgend gezündete Ventile abgeleitet wird, sind keine weiteren Maßnahmen erforderlich, wenn der signalverarbeitende Teil 1a des Steuersatzes bereits entsprechende Zündsteuersignale für Doppelimpulse erzeugt. Bei einer Ansteuerung der Stromrichterventile mit einander überlappenden Langimpulsen, z. B. mit 110°-Impulsen bei einem sechspulsigen Stromrichter, wird ein signalverarbeitender Teil 1a verwendet, der sich nicht überlappende Zündsteuersignale erzeugt. Vor die Verstärker im Verstärkerteil 1b werden Zeitverzögerungsstufen geschaltet, die die erfindungsgemäß korrigierten Zündsteuersignale entsprechend verlängern.

Bei dynamischen Regelvorgängen kann es zu Phasensprüngen in der taktgebenden Wechselspannung und damit zu sehr raschen Änderungen der Zündsteuersignale kommen. Entsprechend rasch ändern sich auch die Impulse der Steuersignalfolge U2 des ODER-Gatters 2 und der Zeitverzögerungsstufe 3. Der spannungsgesteuerte Oszillator VCO im Phasenregelkreis PLL kann wegen des verzögernden Einflusses seines Tiefpaßfilters LPF diesen Änderungen nicht schnell genug folgen. Um trotzdem die erforderlichen Zündimpulse in der richtigen Reihenfolge zu erhalten, ist eine weitere Zeitverzögerungsstufe 4 vorgesehen, die eingangsseitig mit dem Ausgang der ersten Zeitverzögerungsstufe 3 verbunden ist. Die Ansprechverzögerung der zweiten Zeitverzögerungsstufe 4 ist auf einen Wert a2 eingestellt, der etwa in der gleichen Größenordnung liegt wie der Wert a1 der Zeitverzögerungsstufe 3. Die zweite Zeitverzögerungsstufe 4 kann auch unmittelbar mit dem Ausgang des ODER-Gatters 2 verbunden sein. Sie muß in diesem Falle eine größere Ansprechverzögerung aufweisen als die erste Zeitverzögerungsstufe 3. In jedem Falle erscheint am Ausgang der zweiten Zeitverzögerungsstufe 4 eine weitere verzögerte Steuersignalfolge U4 (siehe Fig. 3), die um mehr als a1 gegenüber der Steuersignalfolge U2 am Ausgang des ODER-Gatters 2 versetzt ist.

Weiterhin sind Sperrgatter 6, 9, 12, 15, 18, 21 vorgesehen, deren erster Eingang jeweils mit einem Zündsteuersignal s1 bis s6 des signalverarbeitenden Teils 1a des Steuersatzes und deren zweiter Eingang jeweils mit dem Ausgang der weiteren Zeitverzögerungsstufe 4 verbunden ist. Die Ausgänge der weiteren Sperrgatter 6, 9, 12, 15, 18, 21 sind über ODER-Gatter 7, 10, 13, 16, 19, 22 mit den Endverstärkern im Verstärkerteil 1b des Steuersatzes verbunden.

Wenn aus irgendwelchen Gründen, insbesondere aufgrund von dynamischen Regelvorgängen beispielsweise ein Zündsteuersignal s1 erscheint, nicht jedoch auch ein Triggerimpuls vom spannungsgesteuerten Oszillator VCO das Sperrgatter 5 durchsteuert, so wird spätestens nach Ablauf der Zeitsumme a1 + a2 das Sperrgatter 6 von der weiteren Zeitverzögerungsstufe 4 durchgesteuert und mit dieser Zeitverzögerung ein Zündimpuls gebildet. Damit ist sichergestellt, daß das Hauptventil n1 gezündet wird. Die Zeitverzögerung des Zündimpulses gegenüber dem Zündsteuersignal kann in Kauf genommen werden, da bei dynamischen Vorgängen keine äquidistanten Zündimpulse gefordert werden können.

Die dargestellte Schaltungsanordnung kann durch entsprechende Vervielfachung der Gatter auch für zwölfpulsige und 24pulsige Stromrichter erweitert werden.

## Patentanspruch

Schaltungsanordnung zur Verbesserung der Symmetrie der von einem Steuersatz für einen mehrpulsigen Stromrichter ausgegebenen Zündimpulse, die durch Verstärkung von Zündsteuersignalen gebildet werden, deren Beginn jeweils durch Vergleich einer periodischen Vergleichsspannung eines von einer taktgebenden Wechselspannung gesteuerten Oszillators mit einer Steuergleichspannung bestimmt wird, wobei ein ODER-Gatter zur Bildung einer zusammengefaßten Steuersignalfolge aus den Zündsteuersignalen sowie ein Phasenregelkreis und eine erste Zeitverzögerungsstufe zur Bildung einer äquidistanten Triggerimpulsfolge vorgesehen sind, welche gegenüber der Steuersignalfolge um eine erste vorgegebene Zeitdauer, die etwa der größtmöglichen Unsymmetrie der Zündsteuersignale entspricht, verzögert ist und die Zündimpulse durch konjunktive Verknüpfung der einzelnen Zündsteuersignale mit der Triggerimpulsfolge oder von einer zweiten Verzögerungsschaltung bewirkt werden, welche jeweils um eine zweite Zeitdauer verzögert gegenüber den Zündsteuersignalen Impuls ausgibt, wobei die zweite Zeitdauer größer ist als die erste Zeitdauer, dadurch gekennzeichnet, daß die zweite Verzögerungsschaltung in einer für alle Stromrichterventile gemeinsamen zweiten Zeitverzögerungsstufe (4) mit Ansprechverzögerung besteht, deren Eingang mit dem Ausgang der ersten Zeitverzögerungsstufe (3) oder mit dem Ausgang des ODER-Gatters (2) verbunden ist, wobei eine Anzahl von ersten Sperrgattern (6, 9, 12, 15, 18, 21) und zweiten Sperrgattern (5, 8, 11, 14, 17, 20) vorgesehen sind, deren erster Eingang jeweils mit einem Zündsteuersignal (s1—s6) für ein Stromrichterventil belegt ist, während der zweite Eingang der ersten Sperrgatter (6, 9, 12, 15, 18, 21) jeweils mit dem Ausgang der zweiten Zeitverzögerungsstufe (4) und der zweite Eingang der zweiten Sperrgatter (5, 8, 11, 14, 17, 20) jeweils mit dem Ausgang des Phasenregelkreises (PLL) belegt ist, wobei die Ausgänge der beiden mit demselben Zündsteuersignal (s1—s6) beaufschlagten Sperrgatter jeweils mit den Eingängen eines ODER-Gatters (7, 10, 13, 16, 19, 22) verbunden sind.

## Claim

A circuit for improving the firing angle symmetry of the firing pulses provided by a control element to a multiphase rectifier and formed by amplifying firing control signals, each of whose beginning is respectively determined by comparing a periodic comparsion voltage of an oscillator controlled by a pulsgenerating a. c. voltage with a d. c. control voltage wherein an OR-gate for formig a combined control signal sequence from the firing control signals and a phase regulating circuit and a first time delay stage for forming an equidistant trigger pulse sequence are provided, which trigger pulse sequence is delayed by a first predetermined period, which approximately corresponds to the greatest possible assymmetry of the firing control signals relative to the control signal sequence, and the firing pulses are produced by conjunctive connection of the individual firing control signals to the trigger pulse sequence or by a second delay circuit which emits pulses delayed by a second period compared with the firing control signals, the second period being longer than the first period, characterised in that the second delay circuit consists of a second time delay stage (4) which is common to all rectifiers and has response delay and whose input is connected to the output of the first time delay stage (3) or to the output of the OR-gate (2), where a number of first blocking gates (6, 9, 12, 15, 18, 21) and second blocking gates (5, 8, 11, 14 17, 20) are provided, each of whose first input is respectively supplied with a firing control signal (s1—s6) for a rectifier, whereas each second input of the first blocking gates (6, 9, 12, 15, 18, 21) is respectively connected to the output of the second time delay stage (4) and each secound input of the second blocking gates (5, 8, 11, 14, 17, 20) is respectively connected to the output of the phase regulating circuit (PLL), where the outputs of the two blocking gates, which are supplied with the same firing control signal (s1—s6), are each connected to the input of a respective OR-gate (7, 10, 13, 16, 19, 22).

## Revendication

Montage pour améliorer la symétrie des impulsions d'amorçage délivrés par un dispositif de déclenchement pour un convertisseur statique à impulsions multiples que sont formées par amplification des signaux de commande d'amorçage dont le début est déterminé respectivement par comparaison d'une tension périodique de comparison d' un oscillateur commandé par une tension alternative fixant la cadence, à une tension continue de commande et dans lequel il est prévu une porte OU servant à former une suite rammassée de signaux de commande à partir des signaux de commande d'amorçage ainsi qu'un circuit de régulation de phase et un premier étage de temporisation servant à former une suite d'impulsions équidistantes de déclenchement, retardée d'une première durée prédéterminée correspondant approximantivement à la dissymétrie maximale possible des signaux de commande d'amorçage, par rapport à la suite de signaux de commande et dans lequel les impulsions d'amorçage sont fournies grâce à une combinaison ET des différents signaux de commande d'amorçage avec la suite d'impulsions de déclenchement ou par un second circuit de retardement qui fournit des impulsions qui sont retardées d'une seconde durée par rapport aux impulsions de commande d'amorçage, cette seconde durée étant supérieure à la première durée, caractérisé par le fait que le second circuit de retardement est constitué par un second circuit de temporisation (4) qui présente un retard de réponse et est commun à toutes les valves du convertisseur statique et dont l'entrée est reliée à la sortie du primère étage de temporisation (3) ou à la sortie de la porte OU (2), et qu'il est prévu un certain nombre de premières portes de blocage (6, 9, 12, 15, 18, 21) et de secondes portes de blocage (5, 8, 14, 17, 20), dont la première entrée respective reçoit un signal de commande d'amorçage (s1—s6) pour une valve du convertisseur statique, tandis que dans la seconde entrée et premières portes de blocage (6, 9, 12, 15, 18, 21) est reliée à la sortie du second étage de temporisation (4) et que la seconde entrée des secondes portes de blocage (5, 8, 11, 14, 17, 20) est raccordée à la sortie du circuit de régulation de phase (PLL), les sorties des deux portes de blocage chargées par le même signal de commande d'amorçage (s1—s6) étant reliées respectivement aux entrées d'une porte OU (7, 10, 13, 16, 19, 22).

FIG 1

FIG 3

FIG 2